(19) Europäisches Patentamt / European Patent Office / Office européen des brevets

(11) **EP 4 505 771 B1**

(12) **EUROPEAN PATENT SPECIFICATION**

(45) Date of publication and mention of the grant of the patent:
**17.06.2026 Bulletin 2026/25**

(21) Application number: **22721734.6**

(22) Date of filing: **08.04.2022**

(51) International Patent Classification (IPC):
$H04W\ 12/02^{(2009.01)}$    $H04L\ 9/40^{(2022.01)}$
$H04L\ 9/00^{(2022.01)}$    $H04L\ 9/08^{(2006.01)}$
$H04W\ 12/00^{(2021.01)}$    $H04W\ 12/03^{(2021.01)}$
$H04W\ 12/122^{(2021.01)}$    $H04W\ 12/126^{(2021.01)}$
$H04W\ 12/72^{(2021.01)}$    $H04L\ 9/32^{(2006.01)}$

(52) Cooperative Patent Classification (CPC):
H04W 12/009; H04L 9/002; H04L 9/0825;
H04L 9/0866; H04L 9/3271; H04L 63/0442;
H04L 63/1466; H04W 12/02; H04W 12/03;
H04W 12/122; H04W 12/126; H04W 12/72;
H04L 2209/42; H04L 2209/80

(86) International application number:
**PCT/EP2022/059432**

(87) International publication number:
**WO 2023/193927 (12.10.2023 Gazette 2023/41)**

(54) **FRESHNESS INDICATION OF A SUCI, AND VERIFICATION THEREOF**

FRISCHEANZEIGE EINES SUCI UND VERIFIZIERUNG DAVON

INDICATION DE FRAÎCHEUR D'UN SUCI, ET SA VÉRIFICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**12.02.2025 Bulletin 2025/07**

(73) Proprietor: **Telefonaktiebolaget LM Ericsson (publ)
164 83 Stockholm (SE)**

(72) Inventors:
• **SALMELA, Patrik**
  **02230 Espoo (FI)**
• **LINDSKOG, Niklas**
  **224 72 Lund (SE)**
• **BERGSTRÖM, Daniel**
  **976 32 Luleå (SE)**
• **ARNGREN, Tommy**
  **954 42 Södra Sunderbyn (SE)**
• **NORMANN, Henrik**
  **215 68 Malmö (SE)**
• **ÖKVIST, Peter**
  **973 41 Luleå (SE)**
• **SMEETS, Bernard**
  **247 51 Dalby (SE)**

(74) Representative: **Ericsson Patent Development
Torshamnsgatan 21-23
164 80 Stockholm (SE)**

(56) References cited:
**EP-A1- 3 525 503    WO-A1-2022/067627
CN-A- 113 141 327    CN-A- 114 040 386**

• LIU FUWEN ET AL: "Security Enhancements to Subscriber Privacy Protection Scheme in 5G Systems", 2021 INTERNATIONAL WIRELESS COMMUNICATIONS AND MOBILE COMPUTING (IWCMC), IEEE, 28 June 2021 (2021-06-28), pages 451 - 456, XP033956476, DOI: 10.1109/IWCMC51323.2021.9498591

## Description

TECHNICAL FIELD

Embodiments presented herein relate to a method, a User Equipment (UE), a computer program, and a computer program product for indicating freshness of a Subscription Concealed Identifier (SUCI). Embodiments presented herein further relate to a method, a Unified Data Management (UDM) node, a computer program, and a computer program product for verifying freshness of the SUCI.

BACKGROUND

In general terms, the international mobile subscriber identity (IMSI) is the identifier of a subscription in third generation partnership project (3GPP) cellular networks. The IMSI is split into three parts; the subscription number (mobile subscription identification number; MSIN), the network code (mobile network code; MNC), and the country code (mobile country code; MCC). The MCC points to the country where the operator (Home Public Land Mobile Network; HPLMN, or just home mobile network operator; home MNO for short) is located, the MNC identifies the MNO within that country and the MSIN identifies the subscription in the MNO's network. In fifth generation (5G) 3GPP cellular networks the IMSI is not sent in plaintext during network registration of a UE. This improves privacy. The subscription identifier, which might appear as an IMSI or alternatively have a network access identifier (NAI) format (i.e., username@domain), is referred to as a Subscription Permanent Identifier (SUPI). What is sent during the network registration as identifier of the UE is a SUCI, i.e., a concealed identifier. The SUCI is for IMSI type identifiers created by having the MSIN part be encrypted with a key derived from the public key of the home MNO and the ephemeral key of the UE. That is, only the home MNO can decrypt that part and thereby learn the actual subscription number (i.e., the MSIN). For NAI format identifiers, the username part is encrypted. According to the technical specification 3GPP TS 33.501 "Security architecture and procedures for 5G System", version 17.4.2, the length of the encrypted part of the SUCI depends on the length of the input, but for proprietary schemes puts an upper limit of 3000 octets + length of input; the maximum size of a Scheme Output for proprietary protection schemes shall be total of 3000 octets plus size of input. The (at least partial) reason for not having a specific length is that also NAI format identifiers are possible, and for those the username part (i.e., what is encrypted) can vary in length. This means that there is no clear upper bound for the length of the encrypted part and thus also the part that is being encrypted.

WO2022/067627 A1 refers to a mechanism for protecting an authentication sequence number of a wireless terminal for leakage when transmitted via a radio communication interface during registration and authentication processes.

EP3525503 A1 refers to a concealed identifier, comprising a replay attack protector, to be used by a user equipment when being registered or authenticated to a visited public land mobile network, VPLMN.

LIU Fuwen Et al., Security Enhancements to Subscriber Privacy Protection Scheme in 5G Systems, IEEE, 2021 International Wireless Communications and Mobile Computing (IWCMC), pages 451-456 refers to Security Enhancements to a Subscriber Privacy Protection Scheme, for use in 5G systems, involving a concealed permanent identifier by using a n asymmetric encryption scheme.

With SUCIs being encrypted using public key of home MNO, there is currently no way for the home MNO to verify that the received SUCI is indeed fresh, instead of it being a replayed SUCI captured earlier by a malicious party. This means that an attacker could record the SUCI sent by a victim UE. The attacker could later replay the SUCI from a rogue UE. This would cause the home MNO to believe that the registration request carrying the SUCI was sent by the victim UE. Furthermore, the way SUCIs are generated, any party knowing the SUPI could generate a valid SUCI corresponding to that SUPI, even if not owning the subscription.

Hence, although it according to 3GPP has been specified that the SUCI, and the associated ephemeral key pair, needs to be generated freshly for each network registration, the home MNO does not, and cannot, verify that this is indeed the case. In particular, the UDM node of the home MNO cannot know for sure that SUCI is fresh, it just assumes so.

SUMMARY

An object of embodiments herein is to address the above issues. A particular object is to provide techniques that enable the UDM node to verify freshness of a SUCI. A further particular object is to provide techniques that enable such a SUCI to be generated.

According to a first aspect the objects are met by a method for indicating freshness of a SUCI. The method is performed by a UE. The method comprises generating, in response to receiving a request for location registration of the UE (200), a SUCI for a subscription of the UE. The SUCI comprises a concealed part encrypted based on a public key of a home mobile network operator of the subscription. The concealed part comprises a MSIN of the subscription and a freshness parameter. The method comprises sending the SUCI in a network registration request towards a UDM node of the home mobile network operator, the concealed freshness parameter of the request triggering the starting of a location registration service for the subscription of the UE(200), such that the subscription of the UE(200) gain access to the service, in case the UDM node (300) has verified freshness of the freshness parameter.

According to a second aspect the objects are met by a method for verifying freshness of a SUCI. The method is performed by a UDM node. The method comprises receiving a request for an authentication vector for a UE. The network registration request comprises a SUCI for a subscription of the UE. The SUCI comprises a concealed part encrypted based on a public key of a home mobile network operator of the subscription. The concealed part comprises a MSIN of the subscription and a freshness parameter. The request is received from an Authentication Server Function node. The method comprises revealing the freshness parameter by decrypting the concealed part based on a private key of the home mobile network operator of the subscription. The method comprise providing the subscription of the UE(200) access to a location registration service by initiating (S214) recording of a current location of the UE (200) in accordance with the location registration service, in case the UDM(300) has verified (S206) freshness of the SUCI by validating the freshness parameter.

According to a third aspect the objects are met by a UE configured for indicating freshness of a SUCI. The UE comprises processing circuitry. The processing circuitry is configured to cause the UE to generate, in response to receiving a request for location registration of the UE (200), a SUCI for a subscription of the UE. The SUCI comprises a concealed part encrypted based on a public key of a home mobile network operator of the subscription. The concealed part comprises a MSIN of the subscription and a freshness parameter. The processing circuitry is configured to cause the UE to send the SUCI in a network registration request towards a UDM node of the home mobile network operator, the concealed freshness parameter of the request triggering the starting of a location registration service for the subscription of the UE(200), such that the subscription of the UE(200) gain access to the service, in case the UDM node (300) has verified

According to a fourth aspect the objects are met by a UDM node configured for verifying freshness of a SUCI. The UDM node comprises processing circuitry. The processing circuitry is configured to cause the UDM node to receive a request for an authentication vector for a UE. The network registration request comprises a SUCI for a subscription of the UE. The SUCI comprises a concealed part encrypted based on a public key of a home mobile network operator of the subscription. The concealed part comprises a MSIN of the subscription and a freshness parameter. The request is received from an Authentication Server Function node. The processing circuitry is configured to cause the UDM node to reveal the freshness parameter by decrypting the concealed part based on a private key of the home mobile network operator of the subscription. The processing circuitry is configured to cause the UDM node to provide the subscription of the UE (200) access to a location registration service by initiating recording of a current location of the UE (200) in accordance with the location registration service, in case the UDM(300) has verified freshness of the SUCI by validating the freshness parameter.

According to a fifth aspect the objects are met by a computer program for indicating freshness of a SUCI, the computer program comprising computer program code which, when run on processing circuitry of a UE, causes the UE to perform a method according to the first aspect.

According to a sixth aspect the objects are met by a computer program for verifying freshness of a SUCI, the computer program comprising computer program code which, when run on processing circuitry of a UDM node, causes the UDM node to perform a method according to the second aspect.

According to an eighth aspect the objects are met by a computer program product comprising a computer program according to any of the fifth aspect and the sixth aspect and a computer readable storage medium on which the computer program is stored. The computer readable storage medium could be a non-transitory computer readable storage medium.

Advantageously, these aspects address the above issues.

Advantageously, these aspects enable the UDM node to verify freshness of a SUCI. Advantageously, these aspects enable such a SUCI to be generated.

Advantageously, these aspects enable the UDM node to verify that a SUCI received during a registration procedure with a UE is not replayed or masqueraded.

Advantageously, the actions performed according to these aspects are invisible to the serving MNO of the UE (unless the serving MNO is also the home MNO) as the freshness parameter is carried in the concealed part of the SUCI, which is not accessible to the serving MNO.

Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, module, step, etc." are to be interpreted openly as referring to at least one instance of the element, apparatus, component, means, module, step, etc., unless explicitly stated otherwise. The steps of any method disclosed herein do not have to be performed in the exact order disclosed, unless explicitly stated.

BRIEF DESCRIPTION OF THE DRAWINGS

The inventive concept is now described, by way of example, with reference to the accompanying drawings, in which:

Fig. 1 is a schematic diagram illustrating a communication network according to embodiments;

Figs. 2 and 3 are flowcharts of methods according to embodiments;

Fig. 4 is a signalling diagram according to an embodiment;

Fig. 5 is a schematic diagram showing functional units of a UE according to an embodiment;

Fig. 6 is a schematic diagram showing functional modules of a UE according to an embodiment;

Fig. 7 is a schematic diagram showing functional units of a UDM node according to an embodiment;

Fig. 8 is a schematic diagram showing functional modules of a UDM node according to an embodiment; and

Fig. 9 shows one example of a computer program product comprising computer readable means according to an embodiment.

DETAILED DESCRIPTION

The inventive concept will now be described more fully hereinafter with reference to the accompanying drawings, in which certain embodiments of the inventive concept are shown. This inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description. Any step or feature illustrated by dashed lines should be regarded as optional.

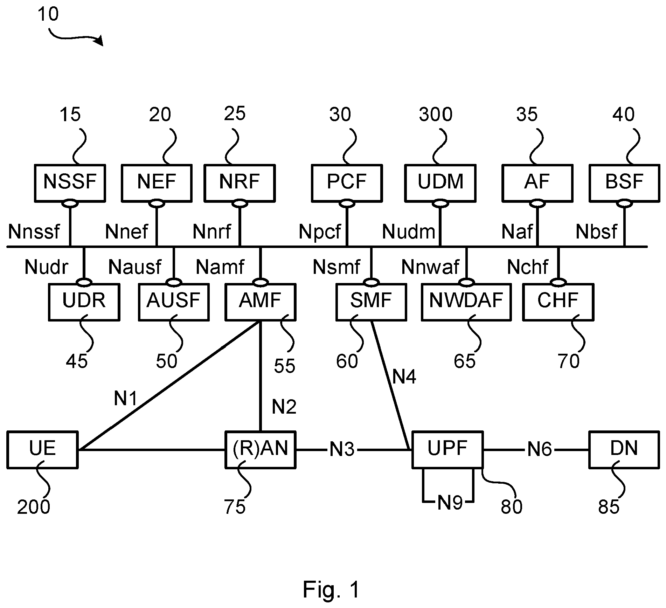

Fig. 1 is a schematic diagram illustrating a communication network 10. The communication network 10 might be regarded as a PLMN and represents a reference architecture of a fifth generation system (5GS). The communication network 10 comprises the following entities: an Authentication Server Function (AUSF) node 50, an Access and Mobility Management Function (AMF) node 55, a Data Network (DN) 85, e.g., operator services, Internet access or third party services, a Network Exposure Function (NEF) node 20, a Network Repository Function (NRF) node 25, a Network Slice Selection Function (NSSF) node 15, a Policy Control Function (PCF) node 30, a Session Management Function (SMF) node 60, a UDM node 300, a Unified Data Repository (UDR) node 45, a User Plane Function (UPF) node 80, an Application Function (AF) node 35, a (Radio) Access Network ((R)AN) 75, a Network Data Analytics Function (NWDAF) node 65, a Binding Support Function (BSF) node 40, and a Charging Function (CHF) node 70. Service based interfaces are represented by the format Nxyz (e.g., Nnssf, Nnef, etc.) and point to point interfaces are represented by the format Nx (e.g., N1, N2, etc.).

A UE 200 is operatively connectable to the communication network 10. The UE 200 could be any of a portable wireless device, mobile station, mobile phone, handset, wireless local loop phone, smartphone, laptop computer, tablet computer, wireless modem, wireless sensor device, network equipped vehicle, network equipped gaming equipment, or the like.

The embodiments disclosed herein relate to mechanisms for indicating freshness of a SUCI and for verifying freshness of the SUCI. In order to obtain such mechanisms there is provided a UE 200, a method performed by the UE 200, a computer program product comprising code, for example in the form of a computer program, that when run on processing circuitry of the UE 200, causes the UE 200 to perform the method. In order to obtain such mechanisms there is further provided a UDM node 300, a method performed by the UDM node 300, and a computer program product comprising code, for example in the form of a computer program, that when run on processing circuitry of the UDM node 300, causes the UDM node 300 to perform the method.

At least some of the herein disclosed embodiments are based on that when the UE 200 generates the SUCI by concealing the MSIN of the SUPI, a freshness parameter is included in the data being concealed. That is, instead of concealing only MSIN, the combination of the MSIN and the freshness parameter is concealed. Examples of different types of freshness parameters will be disclosed below. The SUCI is sent as part of a network registration procedure between the UE 200 and the home MNO of the UE 200. When the UDM node 300 of the home MNO reveals the SUCI, the MNO node 300 finds also the freshness parameter. The UDM node 300 uses the freshness parameter to verify that the SUCI has been freshly generated. Thus, the UDM node 300 can on behalf of the home MNO verify that the SUCI in a registration request is freshly generated by the owner of the corresponding SUPI, i.e., that the SUCI is not a replayed SUCI, and it is not a SUCI generated by an attacker knowing the corresponding SUPI.

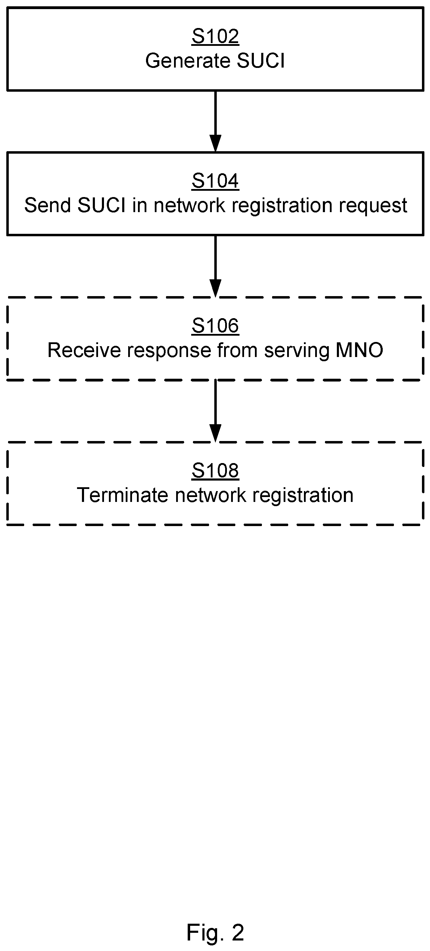

Reference is now made to Fig. 2 illustrating a method for indicating freshness of a SUCI as performed by the UE 200 according to an embodiment.

S102: The UE 200 generates a SUCI for a subscription of the UE 200. The SUCI comprises a concealed part encrypted based on a public key of a home MNO of the subscription. The concealed part comprises an MSIN of the subscription and a freshness parameter.

In some examples, the data (such as the MSIN freshness parameter) of the concealed part is encrypted with a key derived from the public key of the home MNO and a (ephemeral) private key of the UE 200.

In some examples, the SUCI takes the form:

$$SUCI = \{MSIN|FP\}|MNC|MCC,$$

where FP is short for freshness parameter, and where the part inside the curly brackets is the concealed part.

S104: The UE 200 sends the SUCI in a network registration request towards a UDM node 300 of the home MNO.

Embodiments relating to further details of indicating freshness of a SUCI as performed by the UE 200 will now be disclosed.

In some embodiments, the freshness parameter is generated based on information shared between the UE 200 and the UDM node 300. Generating the freshness parameter based on information shared between the UE 200 and the UDM node 300 enables the freshness parameter to be synchronized between the UE 200 and the UDM node 300.

There may be different types of freshness parameters that can be part of the concealed part of the SUCI. Different embodiments relating thereto will now be described in turn.

In some aspects, the freshness parameter takes a randomly initialized value, which is incremented upon use. As will be further disclosed below, such a SUCI could have a new dedicated SUPI type defined. In particular, in some embodiments, the freshness parameter thus takes a pseudo-random value. The seed and the algorithm by means of which the pseudo-random value is generated might then constitute the information shared between the UE 200 and the UDM node 300 prior to the UE 200 sending the SUCI in the network registration request in S104. If the freshness parameter thus takes a pseudo-random value, it might act as a pre-shared key between the UE 200 and UDM node 300.

In some aspects, the freshness parameter is a sequence number. In particular, in some embodiments, the freshness parameter is a sequence number that is incremented upon the SUCI is to be generated or upon the SUCI having been generated. The initial sequence number that the UE 200 first will use might then constitute the information shared between the UE 200 and the UDM node 300 prior to the UE 200 sending the SUCI in the network registration request in S104.

When yet another SUCI needs to be generated (to indicate further freshness of the SUCI) a new pseudo-random value is generated, or the sequence number is incremented. Of course, the value of the freshness parameter could be first updated and then used, still resulting in the same effect.

In some embodiments, the SUCI comprises a SUPI type parameter, and the SUPI type parameter indicates the SUCI to carry the freshness parameter. In this respect, the SUPI is concealed, whereas the SUPI type is not. The SUPI type is a parameter of the SUCI which indicates what type of SUPI is concealed within the SUCI. How this new SUPI type might be used by the UDM node 300 will be disclosed below.

In some embodiments, the network registration request is sent despite the UE 200 already having a valid NAS security context for the subscription. Further in this respect, even if there is an active session/context for the subscription, a new registration request, as in step S104, might thus be sent. One reason for this is that the registration request in S104 is only meant to indicate freshness of the SUCI and/or to trigger some type of service to be performed for the UE 200, and neither to actually set up a context/session for the UE 200, nor to interfere with a current active context/session for the UE 200.

In some aspects, as will be further disclosed below, the UDM node 300 might respond to the network registration request with an authentication request for the UE 200. The UE 200 might in such cases terminate the network registration. Hence, in some embodiments, the UE 200 is configured to perform (optional) step S106.

S106: The UE 200 receives a response from the serving MNO to the network registration request. The response comprises an authentication request for the UE 200.

In this respect, the network registration request sent in S104 is sent to the AMF node 55 of the serving MNO. The AMF node 55 of the serving MNO forwards the request to the AUSF node 50 of the home MNO. The AUSF node 50 of the home MNO then responds to the network registration request by sending an authentication request towards the UE 300. The authentication request is sent to the AMF node 55 of the serving MNO and then forwarded to the UE 200. Thus, although the authentication request actually is by the UE 200 received from the AMF node 55 of the serving MNO, it is originally sent by the AUSF node 50 of the home MNO.

To not run the full registration, and thereby possibly affecting active contexts/sessions, the UE 200 terminates the ongoing network registration. Hence, in some embodiments, the UE 200 is configured to perform (optional) step S108.

S108: The UE 200 terminates the network registration.

In this respect, there might be different ways for the UE 200 to terminate the network registration in S108. In some aspects, the UE 200 refrains from responding to the authentication request. In other aspects, the UE 200 responds with a tailored cancelation message. Hence, in some embodiments, terminating the network registration comprises sending a dedicated network registration cancelation message towards the home MNO. Sending such a tailored cancelation message might ensure that the context/session information in the network of the current context/session is altered in any way. If some context/session information in the network of the current context/session has already been altered, sending the dedicated network registration cancelation message might cause the AUSF node 50 to perform roll-back of the context/session information in the network of the current context/session.

As disclosed above, the registration request in S104 is at least meant to indicate freshness of the SUCI and/or to trigger some type of service to be performed for the UE 200. In this respect, there could be different types of services to be performed for the UE 200. In some aspects, the service is a location registration service. That is, in some embodiments, sending the SUCI (where the concealed part comprises the freshness parameter) in the network registration request acts as a trigger for starting network recording of a current location of the UE 200. Further, in some embodiments, the SUCI is generated in response to the UE 200 having received a request for location registration of the UE 200.

In turn, the request for location registration of the UE 200 might be triggered based on a time interval (such that the location registration of the UE 200 is periodically performed), based on input from a user, based on user behavior, based on an event (such as a trigger signal from a vehicle theft alarm, or a vehicle accident/critical failure e.g., conveyed via an inertial measurement unit (IMU) and accelerometer sensor data), or based on geographical information (such as geo-fence triggered; the UE 200 is passing certain geographical position, moving inside indoor cell coverage, etc.).

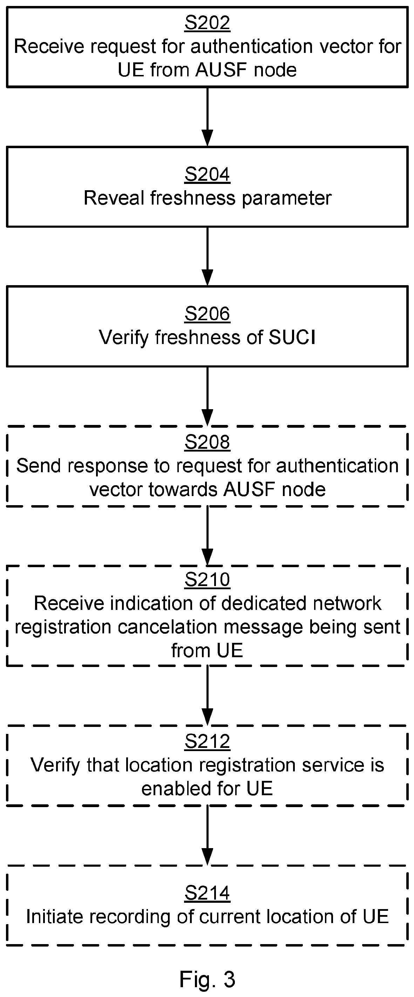

Reference is now made to Fig. 3 illustrating a method for verifying freshness of a SUCI as performed by the UDM node 300 according to an embodiment.

S202: The UDM node 300 receives a request for an authentication vector for a UE 200. The request pertains to a network registration request originating from the UE 200. The network registration request comprises a SUCI for a subscription of the UE 200. The SUCI comprises a concealed part encrypted based on a public key of a home MNO of the subscription. The concealed part comprises an MSIN of the subscription and a freshness parameter. The request is received from the AUSF node 50.

S204: The UDM node 300 reveals the freshness parameter by decrypting the concealed part based on a private key of the home mobile network operator of the subscription.

In some examples, the key used for the decryption is derived from the private key of the home MNO and the (ephemeral) public key of UE, where the latter then is sent together with the SUCI.

S206: The UDM node 300 verifies freshness of the SUCI by validating the freshness parameter.

Embodiments relating to further details of verifying freshness of a SUCI as performed by the UDM node 300 will now be disclosed.

As disclosed above, the freshness parameter might be generated based on information shared between the UE 200 and the UDM node 300. This information is then shared between the UE 200 and the UDM node 300 prior to the UDM node 300 receiving the SUCI in the network registration request in S202. Correspondingly, in some embodiments, the freshness parameter is validated based on information shared between the UDM node 300 and the UE 200.

As disclosed above, in some embodiments, the freshness parameter takes a pseudo-random value. The freshness parameter can then be validated by the UDM node 300 matching the pseudo-random value to an expected pseudo-random value as generated by the UDM node 300. The seed and the algorithm by means of which the pseudo-random value is generated might then constitute the information shared between the UE 200 and the UDM node 300 prior to the UDM node 300 receiving the SUCI in the network registration request in S202. The freshness parameter might then, upon having been validated, act as a pre-shared secret between the UE 200 and the UDM node 300. The UDM node 300 can thereby to, a certain degree, authenticate the UE 200 already by means of the SUCI.

As disclosed above, in some embodiments, the freshness parameter is a sequence number. The freshness parameter can then be validated by the UDM node 300 matching the sequence number to an expected sequence number within a pre-defined range of sequence numbers as generated by the UDM node 300. In this respect, the UDM node 300 might, based on the received sequence number verify that the received sequence number is matching an expected sequence number or is at least quite close to expected sequence number. One reason for this is that there might be messages lost, i.e., network registration requests sent by the UE 200 that do not eventually reach the UDM node 300, resulting in some sequence number desynchronization. Instead of the UDM node 300 generating a new freshness parameter (such as a new pseudo-random value or a new sequence number), the UDM node 300 might store all SUCIs, or ephemeral public keys used for generating SUCIs, and verify that any received SUCI (or ephemeral public key) has not been seen before. This alternative scales poorly as the amount of data the UDM node 300 would have to store and verify against would quickly grow very large.

The initial sequence number that the UE 200 first will use might constitute the information shared between the UE 200 and the UDM node 300 prior to the UDM node 300 receiving the SUCI in the network registration request in S202. In this respect, if the first sequence value to be used by the UE 300 is randomly selected, and the UDM node 300 only successfully validates sequence numbers equal to, or larger than, an expected sequence number (e.g., not more than 10 larger than the currently expected sequence number), receiving an acceptable sequence number acts as authentication of the subscription as the sequence number is only known to the UDM node 300 and the UE 200, so an attacker would have great difficulty to guess an acceptable value of the sequence number.

In order to reduce the risk of an attacker trying to brute force the sequence number (or other type of freshness parameter) by guessing, the UDM node 300 might be configured to detect that there are too many registration requests for a given UE 200, or subscription, within a given time period. Upon such a detection, the UE 200, or the corresponding subscription, might be black-listed or otherwise identified as fraudulent. Another approach is to require the given UE 200 to perform a complete registration procedure and not allow any cancellation message; a completed registration procedure proves the ownership of the subscription better than just the (secret) freshness value.

Further, if there ends up being a sequence number desynchronization between the UE 200 and the UDM node 300, the sequence number can be resynched again by a complete authentication procedure being performed for the UE 200. Such a complete authentication procedure involves the UE 200 to prove its identity. Thus, the UE 200 can send a new network registration request and UDM node 300 can, after successful authentication, accept the sequence number received in new network registration request as the current sequence number.

As disclosed above, in some embodiments, the SUCI comprises a SUPI type parameter, and the SUPI type parameter indicates the SUCI to carry the freshness parameter. If the SUCI comprises such a SUPI type parameter, the UDM node 300 will know that the freshness parameter is carried in a concealed part of the SUCI already before revealing the SUCI. If a SUPI type parameter is not used for this purpose, the UDM node 300 will notice that content of the concealed part of a received SUCI is actually more than just the MSIN (or username part of a NAI formatted SUPI). This can be based on the UDM node 300 inspecting the length of the revealed data and knowing how to parse additional data carried by the SUCI. Alternatively, this can be based on the additional data in the concealed part of the SUCI having a header, or delimiter character, identifying the additional data.

As disclosed above, in some embodiments, the network registration request is sent despite the UE 200 already having a valid NAS security context for the subscription. Correspondingly, in some embodiments, the network registration request is received despite the UDM node 300 already having a valid NAS security context for the subscription.

Alternatively, if the home MNO supports multiple simultaneous network registrations for the same subscription, the new network registration (with the SUCI in which the freshness parameter is included) could be treated as a parallel registration to an ongoing network registration. In this case, this parallel network registration would not affect the already existing context/session. The new network registration could still carry the freshness parameter in the SUCI as indication to trigger a certain service for the subscription, or the UE 200, or the fact that there is a second parallel network registration request could in itself act as a trigger for the service to be performed for the subscription, or the UE 200.

There could be different ways for the UDM node 300 to act once having received the network registration request in S202. In some aspects, the UDM node 300 responds to the UE 200 following network registration practices in the 5GS, and thus with an authentication request. In particular, in some embodiments, the UDM node 300 is configured to perform (optional) step S208.

S208: The UDM node 300 sends a response to the request for the authentication vector for the UE 200. The response comprises the authentication vector for the UE 200. The response is sent towards the AUSF node 50.

As disclosed above, the UE 200 might respond to the authentication request with a dedicated network registration cancelation message. Hence, in some embodiments, the UDM node 300 is configured to perform (optional) step S210.

S210: The UDM node 300 receives an indication of a dedicated network registration cancelation message being sent from the UE 200.

In this respect, the indication might be received from the AUSF node 50 that receives the dedicated network registration cancelation message from the UE 200.

When the UDM node 300 receives a new registration request for a subscription that is already registered, the UDM node 300 will not modify the currently active session/context. Rather, the UDM node 300 will try to complete the primary authentication triggered by the new registration request. As will be described later, the primary authentication of the new registration request will be terminated so there will not be a situation where the current context/session would be replaced by a new context/session as negotiated after a new registration and associated primary authentication. Only the UDM node 300 and the AUSF node 50 will be aware of that there is a new registration exchanged initiated (and later aborted).

As disclosed above, the registration request as received in S202 is only meant to indicate freshness of the SUCI and/or to trigger some type of service to be performed for the UE 200. Thus, in some aspects, upon having verified freshness of the SUCI in S206, the UDM node 300 might give the UE 200, or the subscription, access to some service. In this respect, there could be different types of services to be performed for the UE 200. In some aspects, the service is a location registration service. That is, in some embodiments, receiving the SUCI (where the concealed part comprises the freshness parameter) in the network registration request acts as a trigger for the UDM node 300 to start network recording of a current location of the UE 200.

In some aspects, the service for the UE 200 is not started until the UDM node 300 has verified that the UE 200, or the subscription, is indeed allowed to use the requested service. Hence, in some embodiments, the UDM node 300 is configured to perform (optional) steps S212 and S214.

S212: The UDM node 300 verifies that a location registration service is enabled for the UE 200.

S214: The UDM node 300, in response thereto, initiates recording of the current location of the UE 200 in accordance with the location registration service.

When it has been verified that the location registration service is enabled for the UE 200, the UDM node 300 initiates recording of the current time, the subscription identifier, and the current location of the UE 200. The current location could be based on the tracking area (TA) of the subscription, which access point (such as in terms of the Cell Global Identity (CGI) of a gNB) is currently serving the UE 200, or another type of location information available to the home MNO.

Once the current location of the UE 200 has been recorded, the UDM node 300 responds to the UE 200. This response might in some examples be the response with the authentication request as sent in S208. In such examples, S212 and S214 might thus precede S208 and S210.

The authentication request could then contain dummy data, or it could contain a valid authentication challenge and authentication token (AUTN) that the UE 200 can use to verify the authentication request, acting as an acknowledgement of location registration, has indeed been sent by the home MNO and thereby the location has successfully been registered.

A user may at a later point in time request the registered location information from the home MNO, e.g., by using a web service or a mobile application, etc. The request might include a certain timestamp, time window, etc. and user, or UE, credentials. The response from the home MNO might include a text string, text file, an image or similar, indicating one or more recorded locations for the UE 200, and which then is displayed on the UE 200, or on another device from which the request by the user was made. The home MNO could also sign the data to provide proof of data source and integrity; i.e., that the data has been produced and approved by a trusted entity, namely the home MNO.

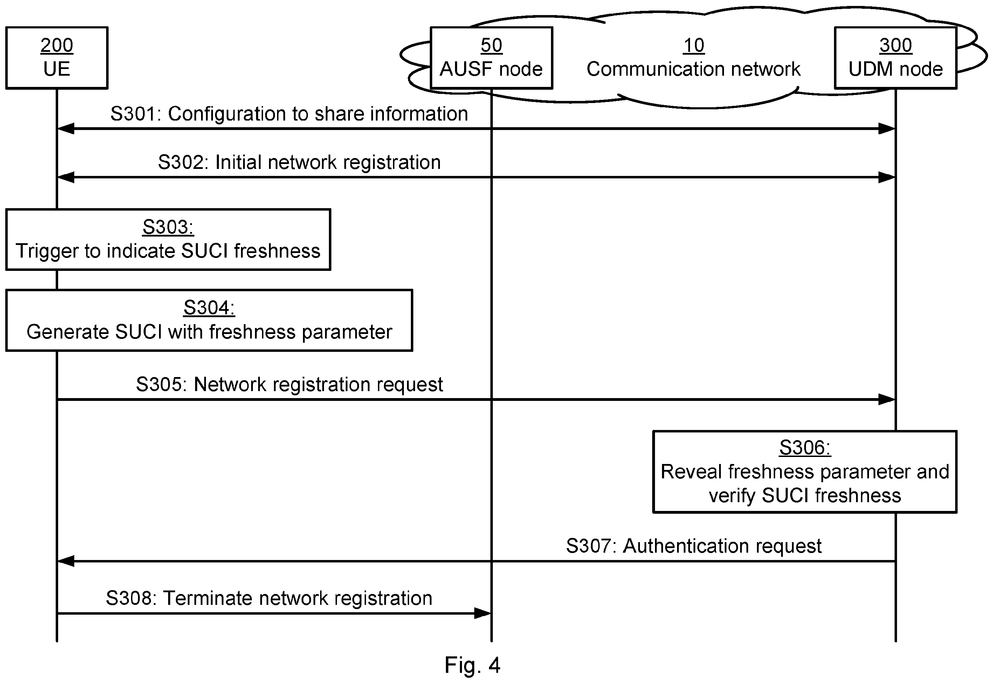

One particular embodiment for a UE 200 to indicate freshness of a SUCI and for a UDM node 300 to verify freshness of the SUCI based on at least some of the above disclosed embodiments will now be disclosed in detail with reference to the signalling diagram of Fig. 4.

S301: The UE 200 and the UDM 300 are configured so that they share information based on which the freshness parameter can be generated. Examples of such information have been disclosed above and apply here as well. Either the information is provided to one of the UE 200 and the UDM 300 from another entity and then provided from this one of the UE 200 and the UDM 300 to the other one of the UE 200 and the UDM 300, or the information is provided to both the UE 200 and the UDM 300 from another entity in the home MNO.

S302: The UE 200 performs initial network registration with the serving MNO .

S303: The UE 200 is triggered to indicate freshness of a SUCI of a subscription to the UDM node 300. Examples of such triggers have been disclosed above and apply here as well.

S304: The UE 200 generates a SUCI for the subscription of the UE 200 as in S102.

S305: The UE 200 sends the SUCI in a network registration request towards the home MNO as in S104. The network registration request is received by the AMF node 55 that triggers the AUSF node 50 to request one or more authentication vectors for the UE 200. The request sent by the AUSF node 50 towards the UDM node 300 comprises the SUCI of the UE 200.

S306: The UDM node 300 reveals the freshness parameter as in S204 and verifies freshness of the SUCI by validating the freshness parameter as in S206. Optionally, the network registration request comprising the SUCI with the concealed freshness parameter acts as a trigger for the UE 200 to request a service for the UE 200, or the subscription, and the UDM node 300 verifies that the UE 200, or subscription, is is indeed allowed to use the requested service

S307: The UDM node 300 responds to the network registration request by sending an authentication request for the UE 200 as in S208. The UE 200 receives the response as in S106.

S308: The UE 200 terminates the network registration as in the variant of S108 a dedicated network registration cancelation message is sent towards the home MNO. The UDM node 300 receives the dedicated network registration cancelation message from the UE 200 as in S210.

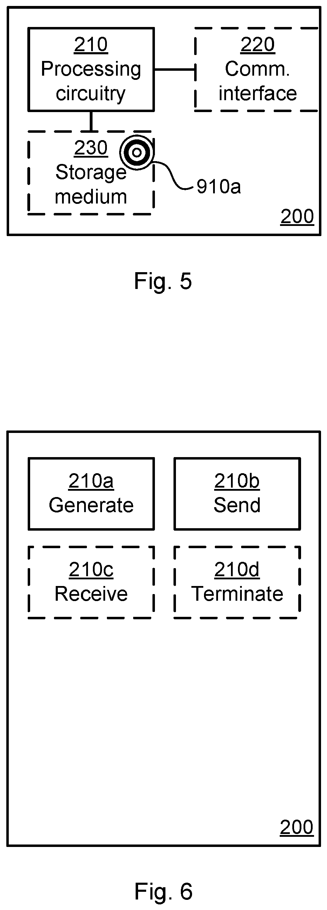

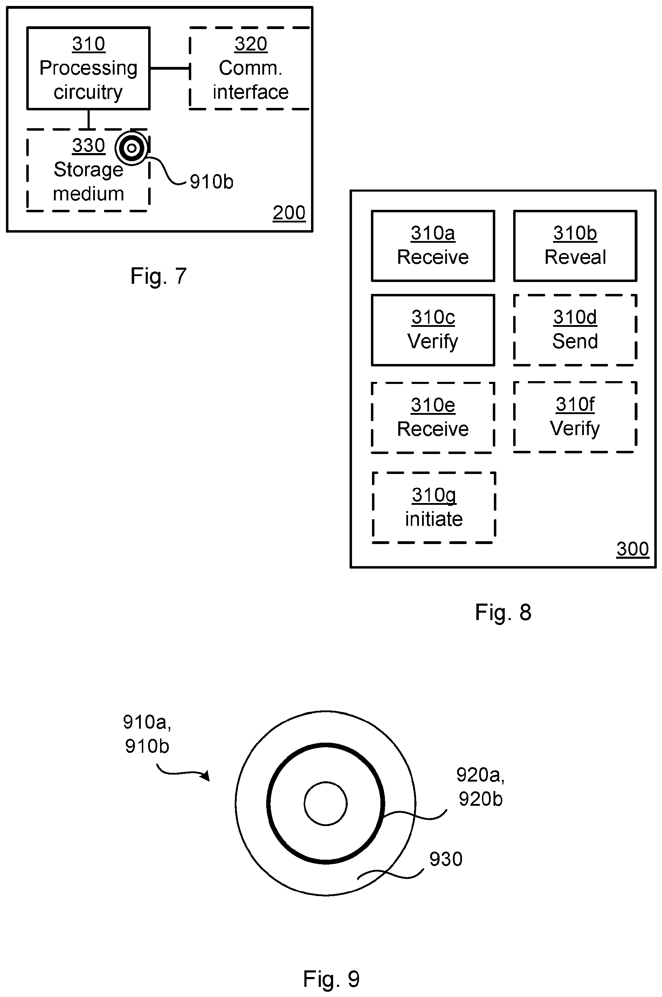

Fig. 5 schematically illustrates, in terms of a number of functional units, the components of a UE 200 according to an embodiment. Processing circuitry 210 is provided using any combination of one or more of a suitable central processing unit (CPU), multiprocessor, microcontroller, digital signal processor (DSP), etc., capable of executing software instructions stored in a computer program product 910a (as in Fig. 9), e.g. in the form of a storage medium 230. The processing circuitry 210 may further be provided as at least one application specific integrated circuit (ASIC), or field programmable gate array (FPGA).

Particularly, the processing circuitry 210 is configured to cause the UE 200 to perform a set of operations, or steps, as disclosed above. For example, the storage medium 230 may store the set of operations, and the processing circuitry 210 may be configured to retrieve the set of operations from the storage medium 230 to cause the UE 200 to perform the set of operations. The set of operations may be provided as a set of executable instructions. Thus the processing circuitry 210 is thereby arranged to execute methods as herein disclosed.

The storage medium 230 may also comprise persistent storage, which, for example, can be any single one or combination of magnetic memory, optical memory, solid state memory or even remotely mounted memory.

The UE 200 may further comprise a communications interface 220 for communications with other entities, functions, nodes, and devices, as in Fig. 1. As such the communications interface 220 may comprise one or more transmitters and receivers, comprising analogue and digital components.

The processing circuitry 210 controls the general operation of the UE 200 e.g. by sending data and control signals to the communications interface 220 and the storage medium 230, by receiving data and reports from the communications interface 220, and by retrieving data and instructions from the storage medium 230. Other components, as well as the related functionality, of the UE 200 are omitted in order not to obscure the concepts presented herein.

Fig. 6 schematically illustrates, in terms of a number of functional modules, the components of a UE 200 according to an embodiment. The UE 200 of Fig. 6 comprises a number of functional modules; a generate module 210 configured to perform step S102, and a send module 210b configured to perform step S104. The UE 200 of Fig. 6 may further comprise a number of optional functional modules, such as any of a receive module 210c configured to perform step S106 and a terminate module 210d configured to perform step S108. In general terms, each functional module 210a:210d may be implemented in hardware or in software. Preferably, one or more or all functional modules 210a:210d may be implemented by the processing circuitry 210, possibly in cooperation with the communications interface 220 and/or the storage medium 230. The processing circuitry 210 may thus be arranged to from the storage medium 230 fetch instructions as provided by a functional module 210a:210d and to execute these instructions, thereby performing any steps of the UE 200 as disclosed herein.

Fig. 7 schematically illustrates, in terms of a number of functional units, the components of a UDM node 300 according to an embodiment. Processing circuitry 310 is provided using any combination of one or more of a suitable central processing unit (CPU), multiprocessor, microcontroller, digital signal processor (DSP), etc., capable of executing software instructions stored in a computer program product 910b (as in Fig. 9), e.g. in the form of a storage medium 330. The processing circuitry 310 may further be provided as at least one application specific integrated circuit (ASIC), or field programmable gate array (FPGA).

Particularly, the processing circuitry 310 is configured to cause the UDM node 300 to perform a set of operations, or steps, as disclosed above. For example, the storage medium 330 may store the set of operations, and the processing circuitry 310 may be configured to retrieve the set of operations from the storage medium 330 to cause the UDM node 300 to perform the set of operations. The set of operations may be provided as a set of executable instructions. Thus the processing circuitry 310 is thereby arranged to execute methods as herein disclosed.

The storage medium 330 may also comprise persistent storage, which, for example, can be any single one or combination of magnetic memory, optical memory, solid state memory or even remotely mounted memory.

The UDM node 300 may further comprise a communications interface 320 for communications with other entities, functions, nodes, and devices, as in Fig. 1. As such the communications interface 320 may comprise one or more transmitters and receivers, comprising analogue and digital components.

The processing circuitry 310 controls the general operation of the UDM node 300 e.g. by sending data and control signals to the communications interface 320 and the storage medium 330, by receiving data and reports from the communications interface 320, and by retrieving data and instructions from the storage medium 330. Other components, as well as the related functionality, of the UDM node 300 are omitted in order not to obscure the concepts presented herein.

Fig. 8 schematically illustrates, in terms of a number of functional modules, the components of a UDM node 300 according to an embodiment. The UDM node 300 of Fig. 8 comprises a number of functional modules; a (first) receive module 310a configured to perform step S202, a reveal module 310b configured to perform step S204, and a (first) verify module 310c configured to perform step S206. The UDM node 300 of Fig. 8 may further comprise a number of optional functional modules, such as any of a send module 310d configured to perform step S208, a (second) receive module 310e configured to perform step S210, a (second) verify module 310f configured to perform step S212, and an initiate module 310g configured to perform step S214. In general terms, each functional module 310a:310g may be implemented in hardware or in software. Preferably, one or more or all functional modules 310a:310g may be implemented by the processing circuitry 310, possibly in cooperation with the communications interface 320 and/or the storage medium 330. The processing circuitry 310 may thus be arranged to from the storage medium 330 fetch instructions as provided by a functional module 310a:310g and to execute these instructions, thereby performing any steps of the UDM node 300 as disclosed herein.

The UDM node 300 may be provided as a standalone device or as a part of at least one further device. For example, the UDM node 300 may be provided in a node of the core network. Alternatively, functionality of the UDM node 300 may be distributed between at least two devices, or nodes. Thus, a first portion of the instructions performed by the UDM node 300 may be executed in a first device, and a second portion of the instructions performed by the UDM node 300 may be executed in a second device; the herein disclosed embodiments are not limited to any particular number of devices on which the instructions performed by the UDM node 300 may be executed. Hence, the methods according to the herein disclosed embodiments are suitable to be performed by a UDM node 300 residing in a cloud computational environment. Therefore, although a single processing circuitry 210, 310 is illustrated in Figs. 5 and 7 the processing circuitry 210, 310 may be distributed among a plurality of devices, or nodes. The same applies to the functional modules 310a:310g of Fig. 8 and the computer program 920b of Fig. 9.

Fig. 9 shows one example of a computer program product 910a, 910b comprising computer readable means 930. On this computer readable means 930, a computer program 920a can be stored, which computer program 920a can cause the processing circuitry 210 and thereto operatively coupled entities and devices, such as the communications interface 220 and the storage medium 230, to execute methods according to embodiments described herein. The computer program 920a and/or computer program product 910a may thus provide means for performing any steps of the UE 200 as herein disclosed. On this computer readable means 930, a computer program 920b can be stored, which computer program 920b can cause the processing circuitry 310 and thereto operatively coupled entities and devices, such as the communications interface 320 and the storage medium 330, to execute methods according to embodiments described herein. The computer program 920b and/or computer program product 910b may thus provide means for performing any steps of the UDM node 300 as herein disclosed.

In the example of Fig. 9, the computer program product 910a, 910b is illustrated as an optical disc, such as a CD (compact disc) or a DVD (digital versatile disc) or a Blu-Ray disc. The computer program product 910a, 910b could also be embodied as a memory, such as a random access memory (RAM), a read-only memory (ROM), an erasable programmable read-only memory (EPROM), or an electrically erasable programmable read-only memory (EEPROM) and more particularly as a non-volatile storage medium of a device in an external memory such as a USB (Universal Serial Bus) memory or a Flash memory, such as a compact Flash memory. Thus, while the computer program 920a, 920b is here schematically shown as a track on the depicted optical disk, the computer program 920a, 920b can be stored in any way which is suitable for the computer program product 910a, 910b.

The inventive concept has mainly been described above with reference to a few embodiments. However, as is readily appreciated by a person skilled in the art, other embodiments than the ones disclosed above are equally possible within the scope of the inventive concept, as defined by the appended patent claims.

**Claims**

1. A method for indicating freshness of a Subscription Concealed Identifier, SUCI, the method being performed by a User Equipment, UE (200), the method comprising:

   generating (S102), in response to receiving a request for location registration of the UE (200),

a SUCI for a subscription of the UE (200), wherein the SUCI comprises a concealed part encrypted based on a public key of a home mobile network operator of the subscription, wherein the concealed part comprises a mobile subscription identification number, MSIN, of the subscription and a freshness parameter, and
sending (S104) the SUCI in a network registration request towards a Unified Data Management, UDM, node (300) of the home mobile network operator, the concealed freshness parameter of the request triggering the starting of network recording of a current location of the UE (200) as a location registration service for the subscription of the UE(200), such that the subscription of the UE(200) gains access to the location registration service, in case the UDM node (300) has verified freshness of the freshness parameter.

2. The method according to claim 1, wherein the freshness parameter is generated based on information shared between the UE (200) and the UDM node (300).

3. The method according to claim 1 or 2, wherein the freshness parameter takes a pseudo-random value.

4. The method according to claim 1 or 2, wherein the freshness parameter is a sequence number that is incremented upon the SUCI is to be generated or upon the SUCI having been generated.

5. A method for verifying freshness of a Subscription Concealed Identifier, SUCI, the method being performed by a Unified Data Management, UDM, node (300), the method comprising:

   receiving (S202) a request for an authentication vector for a User Equipment, UE (200), wherein the network registration request comprises a SUCI for a subscription of the UE (200), wherein the SUCI comprises a concealed part encrypted based on a public key of a home mobile network operator of the subscription, wherein the concealed part comprises a mobile subscription identification number, MSIN, of the subscription and a freshness parameter, and wherein the request is received from an Authentication Server Function node (50);
   revealing (S204) the freshness parameter by decrypting the concealed part based on a private key of the home mobile network operator of the subscription; and
   providing the subscription of the UE (200) access to a location registration service by initiating (S214) recording of a current location of the UE (200) in accordance with the location registration service, in case the UDM(300) has verified (S206) freshness of the SUCI by validating the freshness parameter.

6. The method according to claim 5, wherein the freshness parameter is validated based on information shared between the UDM node (300) and the UE (200).

7. The method according to claim 5 or 6, wherein the freshness parameter takes a pseudo-random value, wherein the freshness parameter is validated by matching the pseudo-random value to an expected pseudo-random value as generated by the UDM node (300), and wherein the freshness parameter, upon having been validated, acts as a pre-shared key between the UE (200) and the UDM node (300).

8. The method according to claim 5 or 6, wherein the freshness parameter is a sequence number, and wherein the freshness parameter is validated by matching the sequence number to an expected sequence number within a pre-defined range of sequence numbers as generated by the UDM node (300).

9. The method according to any of claims 5 to 8, wherein the SUCI comprises a Subscription Permanent Identifier, SUPI, type parameter, and wherein the SUPI type parameter indicates the SUCI to carry the freshness parameter.

10. A User Equipment, UE (200) for indicating freshness of a Subscription Concealed Identifier, SUCI, the UE (200) comprising processing circuitry (210), the processing circuitry being configured to cause the UE (200) to:

generate, in response to receiving a request for location registration of the UE (200),_ a SUCI for a subscription of the UE (200), wherein the SUCI comprises a concealed part encrypted based on a public key of a home mobile network operator of the subscription, wherein the concealed part comprises a mobile subscription identification number, MSIN, of the subscription and a freshness parameter; and
send the SUCI in a network registration request towards a Unified Data Management, UDM, node (300) of the home mobile network operator, the concealed freshness parameter of the request triggering the starting of network recording of a current location of the UE (200) as a location registration service for the subscription of the UE(200), such that the subscription of the UE(200) gains access to the location registration service, in case the UDM node (300) has verified freshness of the freshness parameter.

11. The UE (200) according to claim 10, further being configured to perform the method according to any of claims 2 to 4.

12. A Unified Data Management, UDM, node (300) for verifying freshness of a Subscription Concealed Identifier, SUCI, the UDM node (300) comprising processing circuitry (310), the processing circuitry being configured to cause the UDM node (300) to:

receive a request for an authentication vector for a User Equipment, UE (200), wherein the network registration request comprises a SUCI for a subscription of the UE (200), wherein the SUCI comprises a concealed part encrypted based on a public key of a home mobile network operator of the subscription, wherein the concealed part comprises a mobile subscription identification number, MSIN, of the subscription and a freshness parameter, and wherein the request is received from an Authentication Server Function node (50);
reveal the freshness parameter by decrypting the concealed part based on a private key of the home mobile network operator of the subscription; and
provide the subscription of the UE(200) access to a location registration service by initiating recording of a current location of the UE (200) in accordance with the location registration service, in case the UDM(300) has verified freshness of the SUCI by validating the freshness parameter.

13. A computer program (920a) for indicating freshness of a Subscription Concealed Identifier, SUCI, the computer program comprising computer code which, when run on processing circuitry (210) of a User Equipment, UE (200), causes the UE (200) to:

generate (S102), in response to receiving a request for location registration of the UE (200), a SUCI for a subscription of the UE (200), wherein the SUCI comprises a concealed part encrypted based on a public key of a home mobile network operator of the subscription, wherein the concealed part comprises a mobile subscription identification number, MSIN, of the subscription and a freshness parameter; and
send (S104) the SUCI in a network registration request towards a Unified Data Management, UDM, node (300) of the home mobile network operator, the concealed freshness parameter of the request triggering the starting of network recording of a current location of the UE (200) as a location registration service for the subscription of the UE(200), such that the subscription of the UE(200) gains access to the location registration service, in case the UDM node (300) has verified freshness of the freshness parameter.

14. A computer program (920b) for verifying freshness of a Subscription Concealed Identifier, SUCI, the computer program comprising computer code which, when run on processing circuitry (310) of a Unified Data Management, UDM, node (300), causes the UDM node (300) to:

receive (S202) a request for an authentication vector for a User Equipment, UE (200), wherein the network registration request comprises a SUCI for a subscription of the UE (200), wherein the SUCI comprises a concealed part encrypted based on a public key of a home mobile network operator of the subscription, wherein the concealed part comprises a mobile subscription identification number, MSIN, of the subscription and a freshness parameter, and wherein the request is received from an Authentication Server Function node (50);
reveal (S204) the freshness parameter by decrypting the concealed part based on a private key of the home mobile network operator of the subscription; and
provide the subscription of the UE (200) access to a location registration service by initiating recording of a current location of the UE (200) in accordance with the location registration service, in case the UDM (300) has verified (S206) freshness of the SUCI by validating the freshness parameter.

15. A computer program product (910a, 910b) comprising a computer program (920a, 920b), according to any of claims 13 and 14, and a computer readable storage medium (930) on which the computer program (920a, 920b) is stored.

**Patentansprüche**

1. Verfahren zum Anzeigen von Frische einer verdeckten Abonnementkennung, SUCI, wobei das Verfahren durch ein Benutzergerät, UE (200), durchgeführt wird, wobei das Verfahren Folgendes umfasst:

Erzeugen (S102), als Reaktion auf Empfangen einer Anforderung zur Standortregistrierung des UE (200), einer SUCI für ein Abonnement des UE (200), wobei die SUCI einen verdeckten Teil, der basierend auf einem öffentlichen Schlüssel eines Heimatmobilfunknetzbetreibers des Abonnements verschlüsselt wird, umfasst, wobei der verdeckte Teil eine Mobilfunkabonnementidentifikationsnummer, MSIN, des Abonnements und einen Frischeparameter umfasst, und

Senden (S104) der SUCI in einer Netzregistrierungsanforderung an einen Knoten (300) einer einheitlichen Datenverwaltung, UDM-Knoten, des Heimatmobilfunknetzbetreibers, wobei der verdeckte Frischeparameter der Anforderung den Beginn einer Netzaufzeichnung eines aktuellen Standorts des UE (200) als einenStandortregistrierungsdienst für das Abonnement des UE(200) auslöst, so dass das Abonnement des UE(200) Zugriff auf den Standortregistrierungsdienst erhält, falls der UDM-Knoten (300) die Frische des Frischeparameters verifiziert hat.

2. Verfahren nach Anspruch 1, wobei der Frischeparameter basierend auf zwischen dem UE (200) und dem UDM-Knoten (300) geteilten Informationen erzeugt wird.

3. Verfahren nach Anspruch 1 oder 2, wobei der Frischeparameter einen pseudozufälligen Wert annimmt.

4. Verfahren nach Anspruch 1 oder 2, wobei es sich bei dem Frischeparameter um eine Sequenznummer handelt, die erhöht wird, wenn die SUCI zu erzeugen ist oder wenn die SUCI erzeugt worden ist.

5. Verfahren zum Verifizieren von Frische einer verdeckten Abonnementkennung, SUCI, wobei das Verfahren durch einen Knoten (300) einer einheitlichen Datenverwaltung, UDM-Knoten, durchgeführt wird, wobei das Verfahren Folgendes umfasst:

Empfangen (S202) einer Anforderung für einen Authentifizierungsvektor für ein Benutzergerät, UE (200), wobei die Netzregistrierungsanforderung eine SUCI für ein Abonnement des UE (200) umfasst, wobei die SUCI einen verdeckten Teil, der basierend auf einem öffentlichen Schlüssel eines Heimatmobilfunknetzbetreibers des Abonnements verschlüsselt wird, umfasst, wobei der verdeckte Teil eine Mobilfunkabonnementidentifikationsnummer, MSIN, des Abonnements und einen Frischeparameter umfasst und wobei die Anforderung von einem Authentifizierungsserverfunktionsknoten (50) empfangen wird;
Aufdecken (S204) des Frischeparameters durch Entschlüsseln des verdeckten Teils basierend auf einem privaten Schlüssel des Heimatmobilfunknetzbetreibers des Abonnements; und
Bereitstellen, für das Abonnement des UE (200), von Zugriff auf einen Standortregistrierungsdienst durch Einleiten (S214) von Aufzeichnen eines aktuellen Standorts des UE (200) gemäß dem Standortregistrierungsdienst, falls der UDM(300) die Frische der SUCI durch Validieren des Frischeparameters verifiziert (S206) hat.

6. Verfahren nach Anspruch 5, wobei der Frischeparameter basierend auf zwischen dem UDM-Knoten (300) und dem UE (200) geteilten Informationen validiert wird.

7. Verfahren nach Anspruch 5 oder 6, wobei der Frischeparameter einen pseudozufälligen Wert annimmt, wobei der Frischeparameter durch Abgleichen des pseudozufälligen Wertes mit einem erwarteten pseudozufälligen Wert, wie er durch den UDM-Knoten (300) erzeugt wird, validiert wird und wobei der Frischeparameter nach seiner Validierung als ein vorab geteilter Schlüssel zwischen dem UE (200) und dem UDM-Knoten (300) fungiert.

8. Verfahren nach Anspruch 5 oder 6, wobei es sich bei dem Frischeparameter um eine Sequenznummer handelt und wobei der Frischeparameter durch Abgleichen der Sequenznummer mit einer erwarteten Sequenznummer innerhalb eines vordefinierten Bereichs von Sequenznummern, wie sie durch den UDM-Knoten (300) generiert werden, validiert wird.

9. Verfahren nach einem der Ansprüche 5 bis 8, wobei die SUCI einen Parameter vom Typ permanente Abonnementkennung, SUPI, umfasst und wobei der SUPI-Typ-Parameter der SUCI anzeigt, den Frischeparameter zu tragen.

10. Benutzergerät, UE (200) zum Anzeigen von Frische einer verdeckten Abonnementkennung, SUCI, wobei das UE (200) eine Verarbeitungsschaltung (210) umfasst, wobei die Verarbeitungsschaltung dazu konfiguriert ist, das UE (200) zu Folgendem zu veranlassen:

Erzeugen, als Reaktion auf das Empfangen einer Anforderung zur Standortregistrierung des UE (200),_ einer SUCI für ein Abonnement des UE (200), wobei die SUCI einen verdeckten Teil, der basierend auf einem öffentlichen Schlüssel eines Heimatmobilfunknetzbetreibers des Abonnements verschlüsselt wird, umfasst, wobei der verdeckte Teil eine Mobilfunkabonnementidentifikationsnummer, MSIN, des Abonnements und einen Frischeparameter umfasst; und
Senden der SUCI in einer Netzregistrierungsanforderung an einen Knoten (300) einer einheitlichen Datenverwaltung, UDM-Knoten, des Heimatmobilfunknetzbetreibers, wobei der verdeckte Frischeparameter der Anforderung den Beginn einer Netzaufzeichnung eines aktuellen Standorts des UE (200) als einen Standortregistrierungsdienst für das Abonnement des UE(200) auslöst, so dass das Abonnement des UE(200) Zugriff auf den Standortregistrierungsdienst erhält, falls der UDM-Knoten (300) die Frische des Frischeparameters verifiziert hat.

11. Benutzergerät (200) nach Anspruch 10, ferner dazu konfiguriert, das Verfahren nach einem der Ansprüche 2 bis 4 durchzuführen.

12. Knoten (300) einer einheitlichen Datenverwaltung, UDM-Knoten, zum Verifizieren von Frische einer verdeckten Abonnementkennung, SUCI, wobei der UDM-Knoten (300) eine Verarbeitungsschaltung (310) umfasst, wobei die Verarbeitungsschaltung dazu konfiguriert ist, den UDM-Knoten (300) zu Folgendem zu veranlassen:

Empfangen einer Anforderung für einen Authentifizierungsvektor für ein Benutzergerät, UE (200), wobei die Netzregistrierungsanforderung eine SUCI für ein Abonnement des UE (200) umfasst, wobei die SUCI einen verdeckten Teil, der basierend auf einem öffentlichen Schlüssel eines Heimatmobilfunknetzbetreibers des Abonnements verschlüsselt wird, umfasst, wobei der verdeckte Teil eine Mobilfunkabonnementidentifikationsnummer, MSIN, des Abonnements und einen Frischeparameter umfasst und wobei die Anforderung von einem Authentifizierungsserverfunktionsknoten (50) empfangen wird;
Aufdecken des Frischeparameters durch Entschlüsseln des verdeckten Teils basierend auf einem privaten Schlüssel des Heimatmobilfunknetzbetreibers des Abonnements; und
Bereitstellen, für das Abonnement des UE (200), von Zugriff auf einen Standortregistrierungsdienst durch Einleiten von Aufzeichnen eines aktuellen Standorts des UE (200) gemäß dem Standortregistrierungsdienst, falls der UDM(300) die Frische der SUCI durch Validieren des Frischeparameters verifiziert hat.

13. Computerprogramm (920a) zum Anzeigen von Frische einer verdeckten Abonnementkennung, SUCI, wobei das Computerprogramm einen Computercode umfasst, der, wenn er auf einer Verarbeitungsschaltung (210) eines Benutzergeräts, UE (200), ausgeführt wird, das UE (200) zu Folgendem veranlasst:

Erzeugen (S102), als Reaktion auf Empfangen einer Anforderung zur Standortregistrierung des UE (200), einer SUCI für ein Abonnement des UE (200), wobei die SUCI einen verdeckten Teil, der basierend auf einem öffentlichen Schlüssel eines Heimatmobilfunknetzbetreibers des Abonnements verschlüsselt wird, umfasst, wobei der verdeckte Teil eine Mobilfunkabonnementidentifikationsnummer, MSIN, des Abonnements und einen Frischeparameter umfasst; und

Senden (S104) der SUCI in einer Netzregistrierungsanforderung an einen Knoten (300) einer einheitlichen Datenverwaltung, UDM-Knoten, des Heimatmobilfunknetzbetreibers, wobei der verdeckte Frischeparameter der Anforderung den Beginn einer Netzaufzeichnung eines aktuellen Standorts des UE (200) als einen Standortregistrierungsdienst für das Abonnement des UE(200) auslöst, so dass das Abonnement des UE(200) Zugriff auf den Standortregistrierungsdienst erhält, falls der UDM-Knoten (300) die Frische des Frischeparameters verifiziert hat.

14. Computerprogramm (920b) zum Verifizieren von Frische einer verdeckten Abonnementkennung, SUCI, wobei das Computerprogramm einen Computercode umfasst, der, wenn er auf einer Verarbeitungsschaltung (310) eines Knotens (300) einer einheitlichen Datenverwaltung, UDM-Knotens, ausgeführt wird, den UDM-Knoten (300) zu Folgendem veranlasst:

Empfangen (S202) einer Anforderung für einen Authentifizierungsvektor für ein Benutzergerät, UE (200), wobei die Netzregistrierungsanforderung eine SUCI für ein Abonnement des UE (200) umfasst, wobei die SUCI einen verdeckten Teil, der basierend auf einem öffentlichen Schlüssel eines Heimatmobilfunknetzbetreibers des Abonnements verschlüsselt wird, umfasst, wobei der verdeckte Teil eine Mobilfunkabonnementidentifikationsnummer, MSIN, des Abonnements und einen Frischeparameter umfasst und wobei die Anforderung von einem Authentifizierungsserverfunktionsknoten (50) empfangen wird;

Aufdecken (S204) des Frischeparameters durch Entschlüsseln des verdeckten Teils basierend auf einem privaten Schlüssel des Heimatmobilfunknetzbetreibers des Abonnements; und

Bereitstellen, für das Abonnement des UE (200), von Zugriff auf einen Standortregistrierungsdienst durch Einleiten von Aufzeichnen eines aktuellen Standorts des UE (200) gemäß dem Standortregistrierungsdienst, falls der UDM (300) die Frische der SUCI durch Validieren des Frischeparameters verifiziert (S206) hat.

15. Computerprogrammprodukt (910a, 910b), umfassend ein Computerprogramm (920a, 920b), nach einem der Ansprüche 13 und 14 und ein computerlesbares Speichermedium (930), auf dem das Computerprogramm (920a, 920b) gespeichert ist.

**Revendications**

1. Procédé pour indiquer une fraîcheur d'un identifiant de souscription caché, SUCI, le procédé étant réalisé par un équipement utilisateur, UE (200), le procédé comprenant :

la génération (S102), en réponse à la réception d'une demande d'enregistrement de localisation de l'UE (200), d'un SUCI pour une souscription de l'UE (200), dans lequel le SUCI comprend une partie cachée chiffrée sur la base d'une clé publique d'un opérateur de réseau mobile domestique de la souscription, dans lequel la partie cachée comprend un numéro d'identification de souscription mobile, MSIN, de la souscription et un paramètre de fraîcheur, et l'envoi (S104) du SUCI dans une demande d'enregistrement de réseau vers un nœud de gestion unifiée des données, UDM (300), de l'opérateur de réseau mobile domestique, le paramètre de fraîcheur caché de la demande déclenchant le démarrage d'un enregistrement par le réseau d'une localisation actuelle de l'UE (200) en tant que service d'enregistrement de localisation pour la souscription de l'UE (200), de sorte que la souscription de l'UE (200) accède au service d'enregistrement de localisation, dans le cas où le nœud UDM (300) a vérifié la fraîcheur du paramètre de fraîcheur.

2. Procédé selon la revendication 1, dans lequel le paramètre de fraîcheur est généré sur la base d'informations partagées entre l'UE (200) et le nœud UDM (300).

3. Procédé selon la revendication 1 ou 2, dans lequel le paramètre de fraîcheur prend une valeur pseudo-aléatoire.

4. Procédé selon la revendication 1 ou 2, dans lequel le paramètre de fraîcheur est un numéro de séquence qui est incrémenté au moment où le SUCI doit être généré ou au moment où le SUCI a été généré.

5. Procédé pour vérifier une fraîcheur d'un identifiant de souscription caché, SUCI, le procédé étant réalisé par un nœud de gestion unifiée des données, UDM (300), le procédé comprenant :

la réception (S202) d'une demande pour un vecteur d'authentification pour un équipement utilisateur, UE (200), dans lequel la demande d'enregistrement de réseau comprend un SUCI pour une souscription de l'UE (200), dans lequel le SUCI comprend une partie cachée chiffrée sur la base d'une clé publique d'un opérateur de réseau mobile domestique de la souscription, dans lequel la partie cachée comprend un numéro d'identification de souscription mobile, MSIN, de la souscription et un paramètre de fraîcheur, et dans lequel la demande est reçue provenant d'un nœud de fonction de serveur d'authentification (50) ;

la révélation (S204) du paramètre de fraîcheur par le déchiffrement de la partie cachée sur la base d'une clé privée de l'opérateur de réseau mobile domestique de la souscription ; et

la fourniture à la souscription de l'UE (200) d'un accès à un service d'enregistrement de localisation par l'initiation (S214) de l'enregistrement d'une localisation actuelle de l'UE (200) conformément au service d'enregistrement de localisation, dans le cas où l'UDM (300) a vérifié (S206) la fraîcheur du SUCI par la validation du paramètre de fraîcheur.

6. Procédé selon la revendication 5, dans lequel le paramètre de fraîcheur est validé sur la base d'informations partagées entre le nœud UDM (300) et l'UE (200).

7. Procédé selon la revendication 5 ou 6, dans lequel le paramètre de fraîcheur prend une valeur pseudo-aléatoire, dans lequel le paramètre de fraîcheur est validé par la mise en correspondance de la valeur pseudo-aléatoire avec une valeur pseudo-aléatoire attendue telle que générée par le nœud UDM (300), et dans lequel le paramètre de fraîcheur, après avoir été validé, agit comme une clé pré-partagée entre l'UE (200) et le nœud UDM (300).

8. Procédé selon la revendication 5 ou 6, dans lequel le paramètre de fraîcheur est un numéro de séquence, et dans lequel le paramètre de fraîcheur est validé par la mise en correspondance du numéro de séquence avec un numéro de séquence attendu à l'intérieur d'une plage prédéfinie de numéros de séquence tels que générés par le nœud UDM (300).

9. Procédé selon l'une quelconque des revendications 5 à 8, dans lequel le SUCI comprend un paramètre de type d'identifiant permanent de souscription, SUPI, et dans lequel le paramètre de type SUPI indique que le SUCI transporte le paramètre de fraîcheur.

10. Équipement utilisateur, UE (200) pour indiquer une fraîcheur d'un identifiant de souscription caché, SUCI, l'UE (200) comprenant une circuiterie de traitement (210), la circuiterie de traitement étant configurée pour amener l'UE (200) à :

générer, en réponse à la réception d'une demande d'enregistrement de localisation de l'UE (200), un SUCI pour une souscription de l'UE (200), dans lequel le SUCI comprend une partie cachée chiffrée sur la base d'une clé publique d'un opérateur de réseau mobile domestique de la souscription, dans lequel la partie cachée comprend un numéro d'identification de souscription mobile, MSIN, de la souscription et un paramètre de fraîcheur ; et

envoyer le SUCI dans une demande d'enregistrement de réseau vers un nœud de gestion unifiée des données, UDM (300), de l'opérateur de réseau mobile domestique, le paramètre de fraîcheur caché de la demande déclenchant le démarrage d'un enregistrement par le réseau d'une localisation actuelle de l'UE (200) en tant que service d'enregistrement de localisation pour la souscription de l'UE (200), de sorte que la souscription de l'UE (200) accède au service d'enregistrement de localisation, dans le cas où le nœud UDM (300) a vérifié la fraîcheur du paramètre de fraîcheur.

11. UE (200) selon la revendication 10, étant en outre configuré pour réaliser le procédé selon l'une quelconque des revendications 2 à 4.

12. Nœud de gestion unifiée des données, UDM (300) pour vérifier une fraîcheur d'un identifiant de souscription caché, SUCI, le nœud UDM (300) comprenant une circuiterie de traitement (310), la circuiterie de traitement étant configurée pour amener le nœud UDM (300) à :

recevoir une demande pour un vecteur d'authentification pour un équipement utilisateur, UE (200), dans lequel la demande d'enregistrement de réseau comprend un SUCI pour une souscription de l'UE (200), dans lequel le SUCI comprend une partie cachée chiffrée sur la base d'une clé publique d'un opérateur de réseau mobile domestique de la souscription, dans lequel la partie cachée comprend un numéro d'identification de souscription mobile, MSIN, de la souscription et un paramètre de fraîcheur, et dans lequel la demande est reçue provenant d'un nœud de fonction de serveur d'authentification (50) ;

révéler le paramètre de fraîcheur par le déchiffrement de la partie cachée sur la base d'une clé privée de l'opérateur de réseau mobile domestique de la souscription ; et

fournir à la souscription de l'UE (200) un accès à un service d'enregistrement de localisation par l'initiation de l'enregistrement d'une localisation actuelle de l'UE (200) conformément au service d'enregistrement de localisation, dans le cas où l'UDM (300) a vérifié la fraîcheur du SUCI par la validation du paramètre de fraîcheur.

13. Programme informatique (920a) pour indiquer une fraîcheur d'un identifiant de souscription caché, SUCI, le programme informatique comprenant un code informatique qui, lorsqu'il est exécuté sur une circuiterie de traitement (210) d'un équipement utilisateur, UE (200), amène l'UE (200) à :

   générer (S102), en réponse à la réception d'une demande d'enregistrement de localisation de l'UE (200), un SUCI pour une souscription de l'UE (200), dans lequel le SUCI comprend une partie cachée chiffrée sur la base d'une clé publique d'un opérateur de réseau mobile domestique de la souscription, dans lequel la partie cachée comprend un numéro d'identification de souscription mobile, MSIN, de la souscription et un paramètre de fraîcheur ; et
   envoyer (S104) le SUCI dans une demande d'enregistrement de réseau vers un nœud de gestion unifiée des données, UDM (300), de l'opérateur de réseau mobile domestique, le paramètre de fraîcheur caché de la demande déclenchant le démarrage d'un enregistrement par le réseau d'une localisation actuelle de l'UE (200) en tant que service d'enregistrement de localisation pour la souscription de l'UE (200), de sorte que la souscription de l'UE (200) accède au service d'enregistrement de localisation, dans le cas où le nœud UDM (300) a vérifié la fraîcheur du paramètre de fraîcheur.

14. Programme informatique (920b) pour vérifier une fraîcheur d'un identifiant de souscription caché, SUCI, le programme informatique comprenant un code informatique qui, lorsqu'il est exécuté sur une circuiterie de traitement (310) d'un nœud de gestion unifiée des données, UDM (300), amène le nœud UDM (300) à :

   recevoir (S202) une demande pour un vecteur d'authentification pour un équipement utilisateur, UE (200), dans lequel la demande d'enregistrement de réseau comprend un SUCI pour une souscription de l'UE (200), dans lequel le SUCI comprend une partie cachée chiffrée sur la base d'une clé publique d'un opérateur de réseau mobile domestique de la souscription, dans lequel la partie cachée comprend un numéro d'identification de souscription mobile, MSIN, de la souscription et un paramètre de fraîcheur, et dans lequel la demande est reçue provenant d'un nœud de fonction de serveur d'authentification (50) ;

révéler (S204) le paramètre de fraîcheur par le déchiffrement de la partie cachée sur la base d'une clé privée de l'opérateur de réseau mobile domestique de la souscription ; et
fournir à la souscription de l'UE (200) un accès à un service d'enregistrement de localisation par l'initiation de l'enregistrement d'une localisation actuelle de l'UE (200) conformément au service d'enregistrement de localisation, dans le cas où l'UDM (300) a vérifié (S206) la fraîcheur du SUCI par la validation du paramètre de fraîcheur.

15. Produit programme informatique (910a, 910b) comprenant un programme informatique (920a, 920b), selon l'une quelconque des revendications 13 et 14, et un support de stockage lisible par ordinateur (930) sur lequel le programme informatique (920a, 920b) est stocké.

10

| 15 | 20 | 25 | 30 | 300 | 35 | 40 |
|---|---|---|---|---|---|---|
| NSSF | NEF | NRF | PCF | UDM | AF | BSF |

Nnssf    Nnef    Nnrf    Npcf    Nudm    Naf    Nbsf

Nudr    Nausf    Namf    Nsmf    Nnwaf    Nchf

| UDR | AUSF | AMF | SMF | NWDAF | CHF |
|---|---|---|---|---|---|
| 45 | 50 | 55 | 60 | 65 | 70 |

N1

N2

N4

| UE | (R)AN | —N3— | UPF | —N6— | DN |
|---|---|---|---|---|---|
| 200 | 75 | | N9    80 | | 85 |

Fig. 1

Fig. 2

S202
Receive request for authentication vector for UE from AUSF node

↓

S204
Reveal freshness parameter

↓

S206
Verify freshness of SUCI

↓

S208
Send response to request for authentication vector towards AUSF node

↓

S210
Receive indication of dedicated network registration cancelation message being sent from UE

↓

S212
Verify that location registration service is enabled for UE

↓

S214
Initiate recording of current location of UE

Fig. 3

Fig. 4

Fig. 5

Fig. 6

Fig. 7

Fig. 8

Fig. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022067627 A1

- EP 3525503 A1

**Non-patent literature cited in the description**

- Security architecture and procedures for 5G System. *3GPP TS 33.501*

- Security Enhancements to Subscriber Privacy Protection Scheme in 5G Systems. **LIU FUWEN et al.** 2021 International Wireless Communications and Mobile Computing (IWCMC). IEEE, 451-456